(19) Europäisches Patentamt
European Patent Office
Office européen des brevets

(11) **EP 2 599 230 B1**

(12) **EUROPEAN PATENT SPECIFICATION**

(45) Date of publication and mention
of the grant of the patent:
**08.07.2020 Bulletin 2020/28**

(51) Int Cl.:
*H04L 12/64* *(2006.01)*        *H04B 1/40* *(2015.01)*
*H04L 29/06* *(2006.01)*        *H04L 29/08* *(2006.01)*

(21) Application number: **11812763.8**

(22) Date of filing: **27.07.2011**

(86) International application number:
**PCT/KR2011/005520**

(87) International publication number:
**WO 2012/015234 (02.02.2012 Gazette 2012/05)**

(54) **APPARATUS AND METHOD FOR CONTROLLING SESSION CONNECTION IN COMMUNICATION SYSTEM**

VORRICHTUNG UND VERFAHREN ZUR STEUERUNG EINER SITZUNGSVERBINDUNG IN EINEM KOMMUNIKATIONSSYSTEM

APPAREIL ET PROCÉDÉ DE COMMANDE D'UNE CONNEXION DE SESSION DANS UN SYSTÈME DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.07.2010 KR 20100072627**

(43) Date of publication of application:
**05.06.2013 Bulletin 2013/23**

(73) Proprietor: **Ajou University Industry-Academic Cooperation Foundation**
**Suwon-si, Gyeonggi-do 443-749 (KR)**

(72) Inventors:
• **OH, Seong Keun**
  **Yongin-si**
  **Gyeonggi-do 446-908 (KR)**
• **KIM, Jae Hyun**
  **Seoul 137-882 (KR)**
• **LEE, Min**
  **Suwon-si**
  **Gyeonggi-do 442-816 (KR)**
• **LEE, Hyun Jin**
  **Pohang-si**
  **Gyeongsangbuk-do 790-902 (KR)**
• **KIM, Ji Su**
  **Chuncheon-si**
  **Gangwon-do 200-170 (KR)**

(74) Representative: **Brann AB**
**P.O. Box 3690**
**Drottninggatan 27**
**103 59 Stockholm (SE)**

(56) References cited:
EP-A2- 0 746 127            WO-A1-2009/005316
US-A1- 2002 010 771         US-A1- 2005 185 579
US-A1- 2006 053 229         US-A1- 2007 297 390
US-A1- 2008 279 562         US-A1- 2008 304 440

• SCHMIDT D C ET AL: "TRANSPORT SYSTEM ARCHITECTURE SERVICES FOR HIGH-PERFORMANCE COMMUNICATIONS SYSTEMS", IEEE JOURNAL ON SELECTED AREAS IN COMMUNICATIONS, IEEE SERVICE CENTER, PISCATAWAY, US, vol. 11, no. 4, 1 May 1993 (1993-05-01), pages 489-506, XP000402608, ISSN: 0733-8716, DOI: 10.1109/49.221197

**Description**

[Technical Field]

The present invention relates to an apparatus and method for controlling session connection in a communication system.

[Background Art]

Research into next-generation communication systems is actively being performed to provide services having high-speed various quality of service (QoS) to user equipment (UE). Typical examples of the next-generation communication systems are an institute of electrical and electronics engineers (IEEE) 802.16 m communication system, a long term evolution (LTE) communication system, an IEEE 802.11n wireless local area network (WLAN) communication system, etc.

US 2008/0279562 A1 discloses a communication system includes a transmitter and a receiver that establish mutual connections of a plurality of their communication layers for communication. The transmitter has a request generating part for generating a connection request including data and commands required to connect the plurality of adjacent communication layers, and a request transmitting part for transmitting the connection request to the receiver. The receiver has a request receiving part for receiving the connection request from the transmitter, and a connection establishing pant for extracting the data and commands from the connection request and establishing, based on the extracted data and commands, the connections of the communication layers.

Schmidt D C et al, "Transport system architecture services for high-performance communications systems", IEEE Journal on selected areas in communications (Volume 11, issue 4), 1 May 1993, pages 489-506, discloses transport system services that integrate operating system resources such as CPUs, virtual memory, and I/O devices with network protocols to support distributed multimedia applications running on local and wide area networks are described and classified. A taxonomy is presented, and four commercial and experimental transport systems are compared and evaluated in terms of their protocol processing support. The systems discussed are System V UNIX STREAMS, the BSD UNIX networking subsystem, the x-kernel, and the Choices Conduit system.

WO 2009/005316 A1 discloses session mobility support, wherein a UE first transmits a session invitation message including a Replace header via a packet switching domain and after a response to the session invitation message is received the UE transmits a call setup message via a circuit switching domain.

[Disclosure]

[Technical Problem]

Meanwhile, in a communication system, session control functions as a very critical factor in terms of quality of service (QoS), resource efficiency, transfer delay, overhead. However, in currently available communication systems, a user equipment (UE) controls only sessions of upper layers including a session layer, and sessions of lower layers including a network layer are separately controlled by network nodes including a router, a gateway, a NodeB, etc. included in a corresponding communication system.

Since sessions are separately controlled in each of layers included in each of network nodes included in a communication system, transfer delay and overhead occur due to information exchange between nodes and between layers for session control, and resource efficiency is also decreased thereby. Also, the transfer delay and overhead caused by information exchange between nodes and between layers may result in a decrease in QoS. Also, since only sessions of layers included in each of network nodes are controlled, user information is not used.

[Technical Solution]

One or more embodiments of the present invention provide an apparatus and method for controlling session control in a communication system.

In general aspect of the present invention, there is provided a user equipment (UE) in a communication system according to Claim 1.

Preferably but not necessarily, the session connection controller is configured to combine at least two sessions of at least two transport layers into at least one session of at least one session layer or at least one session of at least one application layer; to combine at least two sessions of at least two network layers into at least one session of at least one transport layer; to combine at least two sessions of at least two physical layers into at least one session of at least one medium access control (MAC) layer or at least one session of at least one physical layer; to divide at least one session of at least one session layer or at least one session of at least one application layer into at least two sessions of at least two transport layers; to divide at least one session of at least one transport layer into at least two sessions of at least two network layers; or to divide at least one session of at least one MAC layer or at least one session of at least one physical layer into at least two sessions of at least two physical layers.

Preferably but not necessarily, the session connection controller is configured to perform diversity combination in which identical information is received through at least two sessions of a layer or each of at least two layers selected from the group consisting of a transport layer, a network layer, and a physical layer and combined, or identical information is divided and transmitted to at least two sessions, or to perform multiplexing combination in which different information are received through at least two sessions and combined, or different information is divided and transmitted to at least two sessions, or to receive identical information and different information simultaneously through at least two sessions, and to perform diversity connection with the identical information and to perform multiplexing connection with the different information, or to divide each of identical information and different information for at least two sessions, and to perform diversity transmission with the identical information and to perform multiplexing transmission with the different information. Preferably but not necessarily, the session connection controller further comprises a session characteristics determination unit for determining characteristics of each of sessions selected from at least one layer, wherein each of at least one layer is selected from the group consisting of a transport layer, a network layer, and a physical layer.

Preferably but not necessarily, the QoE comprises quality of service (QoS), and user experience quality, the session connection mode comprises multiplexing, diversity, and hybrid including multiplexing and diversity, the session flexibility comprises service and traffic, network load, and flexibility corresponding to a channel state, and the QoS comprises data rate, transfer delay, and packet loss, and the user experience quality comprises a mean opinion score (MOS), an un-response rate to call, R-Value, initial buffering time, and download time.

Preferably but not necessarily, the session characteristics determination unit determines characteristics of each of sessions selected from at least one layer, wherein each of at least one layer is selected from the group consisting of a transport layer, a network layer, and a physical layer by combining one or at least two selected from the group consisting of service characteristics information, communication quality information, network information, channel characteristics information.

Preferably but not necessarily, the service characteristics information comprises at least one selected from the group consisting of user preference, quality of experience (QoE) requirement parameter according to a session, and service price, the communication quality information comprises at least one selected from the group consisting of application layer information, session layer information, transport layer information, network layer information, medium access control (MAC) information, and physical layer information, the application layer information comprises availability, reconstruction quality, time constraint, service price, data rate, jitter, transfer delay, and a peak signal-to-noise ratio (PSNR), the session layer information comprises a session state, the transport layer information comprises end-to-end retransmission rate, end-to-end transfer delay, end packet loss, end-to-end throughput, and packet delay change, the network layer information comprises quality of service (QoS) information and routing information, the MAC layer information comprises a link retransmission rate, and a frame error rate, the physical layer information comprises a bit error rate, and signal strength, the network information is information that is supplied by networks with which the UE is to have a connection, and comprises a neighbor list (NL) information, a network load rate, and a price policy, and the channel characteristics information is transmission information for network connection of the UE, and comprises modulation method information, coding method information, transmit and receive method information, and multiple antenna method information.

Preferably but not necessarily, the session characteristics determination unit determines session size of each of at least one layer selected from the group consisting of a transport layer, a network layer, and a physical layer, wherein the session size is a size of the transmission path for exchanging data stream, packet, or signal in each layer to supply a user requirement service.

Preferably but not necessarily, the session size of the transport layer is a segment throughput, the session size of the network layer is a packet throughput, and the session size of the physical layer is a channel capacity.

Preferably but not necessarily, the session characteristics determination unit determines session flexibility of each of at least one layer selected from the group consisting of a transport layer, a network layer, and a physical layer, wherein the session flexibility is a degree of response to change of service and traffic, network load, and a channel state.

Preferably but not necessarily, the session characteristics determination unit determines a quality of service (QoS) parameter of each of at least one layer selected from the group consisting of a transport layer, a network layer, and a physical layer, wherein the QoS parameter of the transport layer comprises segment transfer delay, retransmission count, segment throughput, round trip time (RTT), and segment loss, the QoS parameter of the network layer comprises jitter, packet transfer delay, packet loss, packet throughput, and use price, and the QoS parameter of the physical layer comprises a received signal strength indicator (RSSI), signal-to-noise ratio (SNR), a signal-to-interference plus noise ratio (SINR), a channel capacity, a data rate, a error rate, an outrage rate, and signal transfer delay.

Preferably but not necessarily, the session characteristics determination unit determines a user experience quality parameter of each of at least one layer selected from the group consisting of a transport layer, a network layer, and a physical layer, the user experience quality parameter for an audio service comprises mean opinion score (MOS), an un-response rate to call, and R-value, the user experience quality parameter for a video streaming service comprises initial buffering time, jerkiness, and audio and video synchronization, the user experience quality parameter for a WEB browsing service comprises a page reaction time,the user experience quality parameter for a file exchange service comprises data rate, and download time.

Preferably but not necessarily, the UE further comprises a path characteristics determination unit configured to elect a transmission path for session connection of each of at least one layer selected from the group consisting of a transport layer, a network layer, and a physical layer, and to determine characteristics of the elected transmission path. Preferably but not necessarily, the path characteristics determination unit (213) determines a transmission path, the number of paths, a session size according to a path, and transmission characteristics according to a path of the layer or each of at least two layers selected from the group consisting of a transport layer, a network layer, and a physical layer, wherein the transmission characteristics according to a path comprise throughput, delay, error rate, and loss rate according to a path.

[Advantageous Effects]

A user equipment (UE) according to an embodiment of the present invention directly determines characteristics of a session of each of layers by using various application layer quality information, evaluation information including various transmission layer information including end-to-end transfer delay, end-to-end throughput, etc., and network supply information including a network load rate, use price, path information, according to service, and controls session connection, thereby guarantying supply of a user requirement service and improving network efficiency. A UE according to an embodiment of the present invention determines session characteristics according to a layer, taking a lead to control handover between heterogeneous networks or between multiple cells in a network, thereby forming a dispersion control structure, and utilizes evaluation information and network supply information of the UE so that transfer delay and overhead caused by evaluation information acquirement and information exchange between heterogeneous networks which may occur in a conventional session management technology based on a network may be substantially reduced and a communication network resource may be efficiently used.

A UE according to an embodiment of the present invention directly controls session connection according to a layer, so that a multi-homing technology, in which a network connection service is supplied by connection with many networks through multiple transmission paths according to a layer, may be easily embodied. When the multi-homing technology is used, error prevention, service dispersion, etc., which are not achieved by only single connection, may be effectively provided and also, mobility is enhanced and selective change to politically and economically beneficial connection links is possible.

A UE according to an embodiment of the present invention enables supply of an inexpensive and high-speed wireless data service according to user s requirements and preference anywhere and anytime.

A UE according to an embodiment of the present invention enables network connection that is optimized in terms of a user so as to construct an always-online communication environment in which high quality multimedia service is stably supplied and necessary information is immediately obtained.

A UE according to an embodiment of the present invention reduces a burden of supplying mobility between heterogeneous networks out of network operators to remove obstacles to introduction of novel network and service, thereby enabling emergence of various networks and embodiment of a real mobile life.

A UE according to an embodiment of the present invention removes obstacles to network evolution and emergence of various access networks and services so as to induce various new service and access network emergence, thereby contributing to activation of service market even in a mobile communication-based ubiquitous communication environment in the future.

A UE according to an embodiment of the present invention may substantially contribute to an increase in a user equipment market share through maximization of added values.

A UE according to an embodiment of the present invention enhances communication network efficiency, and improves CAPEX/OPEX via optimized access network design, so as to reduce communication network costs and activate the equipment industry.

[Brief Description of Drawings]

FIG. 1 is a schematic diagram illustrating sessions of layers in a communication system according to an embodiment of the present invention.

FIG. 2 is a diagram illustrating an example of an interior structure of a user equipment (UE) of a communication system according to an embodiment of the present invention.

FIG. 3 is a diagram illustrating another example of an interior structure of UE of a communication system according to an embodiment of the present invention.

FIG. 4 is a diagram illustrating another example of an interior structure of UE of a communication system according to an embodiment of the present invention.

FIG. 5 is a diagram illustrating another example of an interior structure of UE of a communication system according to an embodiment of the present invention.

FIG. 6 is a schematic diagram illustrating a session change process performed by UE in a communication system according to an embodiment of the present invention.

FIG. 7 is a schematic diagram illustrating a session connection process performed by UE in a communication system according to an embodiment of the present invention.

[Best Mode for Carrying out the Invention]

Hereinafter, one or more embodiments of the present invention will be described in detail with reference to the attached drawings. Also, if the detailed description on related known function and structure is considered to unnecessarily make the present invention unclear, it will not be presented herein.

The present invention provides an apparatus for controlling session connection in a communication system. In the present invention, an example of the communication system may be a multicell or heterogeneous network that includes at least one system selected from the group consisting of a long term evolution (LTE) communication system, an institute of electrical and electronics engineers (IEEE) 802.16m communication system, a WiBro communication system, and a wireless local area network (WLAN) communication system. Also, in addition to the LTE, IEEE 802.16m, and WLAN communication systems, a wireless communication system, such as Wireless Personal Area Network (WPAN), and a wired communication system, such as local area network (LANk) may also be included.

Prior to description of the present invention, the following terms will now be defined.

(1) User requirement service

This term refers to an act of efficiently supplying various media desired by a user, and the media includes audio media, video media, data media, etc. In this regard, the audio media includes audio, music, audio call, radio broadcasting, etc., the video media includes video broadcasting, video streaming, video conference, video call, etc., and the data media includes games, navigation, short message, WEB browsing, e-mails, file exchange, etc.

(2) Session

The term "session" refers to an information exchange flow between a transmission node and a receiving node, and a transmission path is a path for session. Herein, a session and a transmission path of each of layers will now be described below.

First, a session of a transport layer is a flow for exchanging a segment that constitutes a data stream of one user requirement service between end nods so as to provide requirement service, and a transmission path of the transport layer is a path for the session of the transport layer. Secondly, a session of a network layer is a connection flow between network layers each that constitute the session of the transport layer, and a flow for exchanging data packet that constitutes the segment between end nodes, and a transmission path of the network layer is a path for the session of the network layer.

Thirdly, a session of a physical layer is a connection flow between physical layers each that constitute a session of the network layer, and a signal exchange flow using a physical medium between a transmission node and a receiving node, and a transmission path of the physical layer is a path for a session of the physical layer.

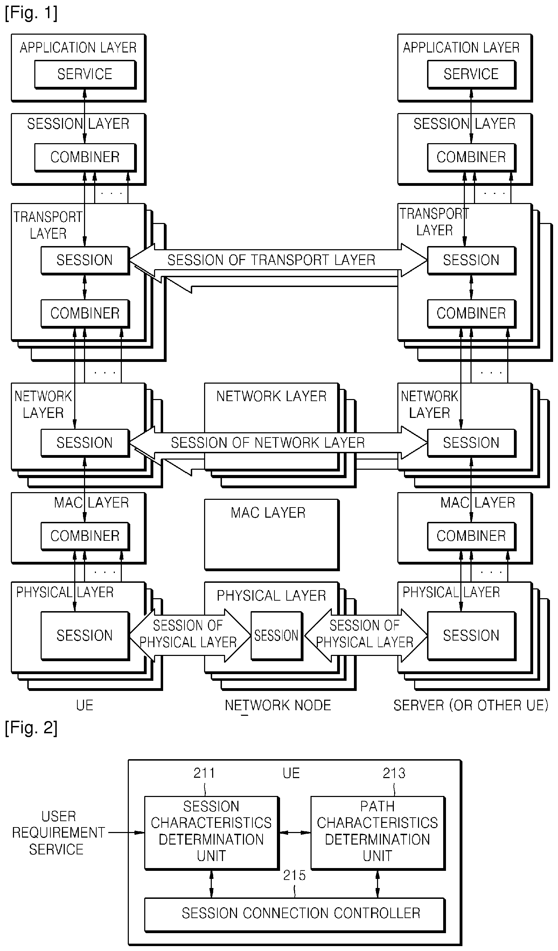

FIG. 1 is a schematic diagram illustrating sessions of layers in a communication system according to an embodiment of the present invention.

Referring to FIG. 1, a user equipment (UE) may generate at least one network node and at least one physical layer session. If the UE generates at least two physical layer sessions, a combiner of a medium access control (MAC) layer may perform a session connection operation for combining the at least two physical layer sessions into at least one medium connection control layer session, or dividing at least one medium connection control layer session into at least two physical layer sessions. In this regard, the UE may generate at least two network nodes and the at least two physical layer sessions. Also, if the UE generates at least two physical layer sessions, a combiner of a physical layer may perform a session connection operation for combining the at least two physical layer sessions into at least one physical layer session or dividing at least one physical layer session into at least two physical layer sessions.

Also, the UE may generate at least one server and at least one network layer session. In this regard, the server may be a UE that is different from the UE. If the UE generates at least two network layer sessions, a combiner of a transport layer may perform a session connection operation for combining the at least two network layer sessions into at least one transport layer session or dividing at least one transport layer session into at least two network layer sessions. In this regard, the UE may generate at least two servers and at least two network layer sessions. Also, when the UE generates at least two network layer sessions, the at least two network layer sessions may be established via either at least two different communication devices in an identical communication network, or at least two different communication networks. In this regard, examples of the communication device are NodeB, relay, a repeater, femtocell NodeB, etc., and examples of the communication network are LTE, IEEE 802.16m, WLAN, WiBro, WPAN, LAN, etc.

Also, the UE may generate at least one server and at least one transport layer session. If the UE generates at least two transport layer sessions, a combiner of a session layer may perform a session connection operation for combining the at least two transport layer sessions into at least one session layer session, or dividing at least one session layer session into at least two transport layer sessions. The UE may generate at least two servers and at least two transport layer sessions. Also, if the UE generates at least two transport layer sessions, the at least two transport layer sessions may be established via either at least two different communication devices in an identical communication network, or at least two different communication networks.

Also, a network node is a communication node between an UE and a server, and examples of the network node are relay, or NodeB, or a gateway, or a router, or a switch.

Also, sessions of layers of a LTE communication system illustrated in FIG. 1 are used for illustrative purpose only, and a combiner for performing session connection between layers may be embodied as separate modules in the respective layers, or may be integrally embodied as one module. If the combiner for performing session connection between layers is unified as one module, the combiner may separately or wholly perform session connection of the respective layers.

In this regard, characteristics of the respective layer sessions will now be described in detail.

First, characteristics of a session of a transport layer will now be described in detail.

Characteristics of a session of a transport layer include a session size of the transport layer and a session QoS parameter of the transport layer. In this regard, an example of the session size of the transport layer is a segment throughput, and examples of the session QoS parameter of the transport layer are a segment transfer delay, a retransmission count, a round trip time (RTT), a segment throughput, a segment loss, etc. In this regard, the segment transfer delay refers to a time period between when a corresponding segment is received and when a next segment is received. The retransmission count refers to a segment retransmission count per unit hour. The RTT refers to a time period between when a segment is transmitted and when a response corresponding to the segment is received. The segment throughput refers to a segment transmission amount per unit hour. The segment loss refers to a segment loss probability occurring during segment transmission.

For example, the session QoS parameter of the transport layer includes at least two parameters selected from the group consisting of the segment transfer delay, the retransmission count, RTT, the segment throughput, and the segment loss.

Secondly, characteristics of a session of a network layer will now be described in detail.

Characteristics of a session of a network layer include a session size of the network layer and a session QoS parameter of the network layer. In this regard, an example of the session size of the network layer is a segment throughput, and examples of the session QoS parameter of the network layer are jitter, packet transfer delay, packet loss, packet throughput, use price, etc. The jitter refers to a dispersion of packet arrival time periods, and a degree of packet arrival time change. The packet transfer delay refers to a time period between when a corresponding packet is received and when a next packet is received. The packet loss refers to a segment loss probability occurring during packet transmission. The packet throughput refers to a packet transmission amount per unit time. The use price refers to a cost for network connection and utilization performed by UE per unit time (or unit packet).

For example, the session QoS parameter of the network layer includes at least two parameters selected from the group consisting of the jitter, packet transfer delay, packet loss, packet throughput, and use price.

Thirdly, characteristics of a session of a physical layer will now be described in detail.

Characteristics of a session of a physical layer include a session size of the physical layer and a session QoS parameter of the physical layer. In this regard, an example of the session size of the physical layer is a channel capacity, and examples of the session QoS parameter of the physical layer are a signal to noise ratio (SNR), a signal to interference and noise ratio (SINR), a received signal strength indicator (RSSI), channel capacity, a suppliable data rate, a suppliable data rate dispersion, error rate, outage rate, signal transfer delay, etc. In this regard, the RSSI refers to a received signal strength measured in a receiving node, the SNR refers to a ratio of signal power to noise power, the SINR refers to a signal power ratio with respect interference and noise power, and the channel capacity refers to an maximum amount of information that is transmissible through a channel without error. Also, the suppliable data rate refers to an actually transmissible data rate that is determined in consideration of channel characteristics elements, and may be an instantaneous data rate or an mean data rate, and may include a total data rate, a data rate according to a user, a data rate according to a stream, etc. The suppliable data rate dispersion refers to a degree of suppliable data rate change according to channel characteristics, and the error rate refers to an error probability occurring during signal transmission and may include a bit error rate (BER), block error rate (BLER), a frame error rate (FER), a packet error rate (PER), etc. The outrage rate is a communication outrage probability occurring when a channel quality is equal to or lower than a communication outrage reference that has set in advance, and the communication outrage reference may include RSSI, SNR, SINR, error rate, channel capacity, suppliable data rate, etc. For example, if the communication outrage reference is 0[dB] SNR, the outrage rate of UE is determined according to a probability that SNR of UE experiences a channel equal to or lower than 0[dB]. The signal transfer delay refers to a time period between when a corresponding signal is received and when a next signal is received.

For example, the session QoS parameter of the physical layer includes at least two parameters selected from the group consisting of SNR, SINR, RSSI, channel capacity, suppliable data rate, suppliable data rate dispersion, error rate, outrage rate, and signal transfer delay.

Also, at least two selected from the characteristics of the sessions of the layers may be combined to define one parameter, and the defined parameter may be used as a session connection control parameter. For example, SINR, which is a characteristic of the session of the physical layer, is combined with transfer delay and packet loss, which are characteristics of the session of the network layer so as to define one parameter, that is, a required bandwidth (BW). In this regard, the required BW is a resource amount of a transmission path required for supplying a user requirement service, and may be obtained, as shown in Equation 1 below, by dividing an effective data rate by frequency efficiency:

MathFigure 1

[Math.1]

$$\text{Required BW}_i[\text{Hz}] = \frac{\text{Effective data rate}_i \ [\text{b/s}]}{\text{Spectral efficiency}_i \ [\text{b/s/Hz}]}$$

The effective data rate is calculated in consideration of QoS requirements including a peak data rate, a mean data rate, delay bound, packet loss ratio, a maximum burst size, etc., by using Equation 2 below:

MathFigure 2

[Math.2]

$$ER_i = g \times s_i \times (1 - L)$$

In Equation 2, $ER_i$ is the effective data rate, L is a required packet loss rate, and g is a data rate that is required to satisfy QoS requirements including delay bound (D), maximum burst size(s), etc. and may have a value between a peak data rate ($R_{peak}$) and a mean data rate ($R_{mean}$) according to a service. For example, a requirement data rate (g) for a service, such as video streaming or game, in which delay bound, data rate, and burst size all substantially affect QoS may be obtained by using Equation 3 below.

MathFigure 3

[Math.3]

$$g = \frac{\sigma R_{peak}}{\sigma + D R_{peak}}$$

As another example, a requirement data rate (g) for a service, such as WEB browsing, E-mail, or file exchange, that is relatively not sensitive to delay may be defined as a mean data rate ($R_{mean}$) as shown in Equation 4 below.

MathFigure 4

[Math.4]

$$g = R_{mean}$$

Also, $s_i$ in Equation 2 is a transmission count that is needed to transmit one packet successfully, and varies according to a channel situation. In this regard, if a packet error rate of path i is $p_{e,i}$ and a maximum transmission count is 1, SINR according a path and corresponding BER and PER are shown as Equation 5:

MathFigure 5

[Math.5]

$$s_i = \frac{1 - p_{e,i}^{l+1}}{1 - p_{e,i}}.$$

Also, the spectral efficiency in Equation 1 is a value that is determined according to a modulation and coding scheme (MCS) level in consideration of path characteristics of, for example, SINR. For example, spectral efficiency values are shown in Table 1 below.

Table 1

[Table 1]

| Modulation | Coding rate | Receiver SINR (dB) | Spectral Efficiency (b/s/Hz) |
|---|---|---|---|
| QPSK | 1 / 3 | -13 | 0.6222 |
| | 1 / 2 | 1.1 | 0.9333 |
| | 2 / 3 | 3.3 | 1.2444 |
| | 4 / 5 | 4.5 | 1.4933 |
| 16-QAM | 1 / 3 | 5.2 | 1.2444 |
| | 1 / 2 | 6.4 | 1.8667 |
| | 2 / 3 | 7.4 | 2.4889 |
| | 4 / 5 | 10.6 | 2.9867 |
| 64-QAM | 1 / 3 | 10.9 | 1.8667 |
| | 1 / 2 | 11.5 | 2.8000 |
| | 2 / 3 | 14.3 | 3.7333 |
| | 4 / 5 | 16.8 | 4.4800 |

Then, a user experience quality will now be described in detail.

A user experience quality parameter may vary according to a service, which will now be described in detail.

First, a user experience quality parameter for audio service includes mean opinion score (MOS), a un-response rate to call, R-value, etc. The MOS refers to a QoS evaluated in consideration of human recognition characteristics, the un-response rate to call refers to a probability that an outrage state of audio call occurs, and the R-value refers to a quality index representing a quality that is recognizable by using network environment information within a measurement range.

Secondly, a user experience quality parameter for a video streaming service includes resource amount of a transmission path required for supplying a user requirement service, and may be obtained, as shown in Equation 1 below, by dividing an effective data rate by frequency efficiency:
MathFigure 1

1] MathFigure 1

[Math.1]

$$\text{Required BW}_i[\text{Hz}] = \frac{\text{Effective data rate}_i \ [\text{b/s}]}{\text{Spectral efficiency}_i \ [\text{b/s/Hz}]}$$

The effective data rate is calculated in consideration of QoS requirements including a peak data rate, a mean data rate, delay bound, packet loss ratio, a maximum burst size, etc., by using Equation 2 below:
MathFigure 2

MathFigure 2

[Math.2]

$$ER_i = g \times s_i \times (1 - L)$$

In Equation 2, $ER_i$ is the effective data rate, L is a required packet loss rate, and g is a data rate that is required to satisfy QoS requirements including delay bound (D), maximum burst size(s), etc. and may have a value between a peak data rate ($R_{peak}$) and a mean data rate ($R_{mean}$) according to a service. For example, a requirement data rate (g) for a service, such as video streaming or game, in which delay bound, data rate, and burst size all substantially affect QoS may be obtained by using Equation 3 below.
MathFigure 3

[Math.3]

$$g = \frac{\sigma R_{peak}}{\sigma + DR_{peak}}$$

As another example, a requirement data rate (g) for a service, such as WEB browsing, E-mail, or file exchange, that is relatively not sensitive to delay may be defined as a mean data rate ($R_{mean}$) as shown in Equation 4 below.
MathFigure 4

[Math.4]

$$g = R_{mean}$$

Also, $s_i$ in Equation 2 is a transmission count that is needed to transmit one packet successfully, and varies according to a channel situation. In this regard, if a packet error rate of path i is $p_{e,i}$ and a maximum transmission count is 1, SINR according a path and corresponding BER and PER are shown as Equation 5:
MathFigure 5

[9]  MathFigure 5

[Math.5]

$$s_i = \frac{1 - p_{e,i}^{I+1}}{1 - p_{e,i}}.$$

Also, the spectral efficiency in Equation 1 is a value that is determined according to a modulation and coding scheme (MCS) level in consideration of path characteristics of, for example, SINR. For example, spectral efficiency values are shown in Table 1 below.

Table 1

[Table 1]

| Modulation | Coding rate | Receiver SINR (dB) | Spectral Efficiency (b/s/Hz) |
|---|---|---|---|
| QPSK | 1 / 3 | -1.3 | 0.6222 |
| | 1 / 2 | 1.1 | 0.9333 |
| | 2 / 3 | 3.3 | 1.2444 |
| | 4 / 5 | 4.5 | 1.4933 |
| 16-QAM | 1 / 3 | 5.2 | 1.2444 |
| | 1 / 2 | 6.4 | 1.3667 |
| | 2 / 3 | 7.4 | 2.4889 |
| | 4 / 5 | 10.6 | 2.9367 |
| 64-QAM | 1 / 3 | 10.9 | 1.8667 |
| | 1 / 2 | 11.5 | 2.3000 |
| | 2 / 3 | 14.3 | 3.7333 |
| | 4 / 5 | 168 | 4.4800 |

Then, a user experience quality will now be described in detail.

A user experience quality parameter may vary according to a service, which will now be described in detail.

First, a user experience quality parameter for audio service includes mean opinion score (MOS), a un-response rate to call, R-value, etc. The MOS refers to a QoS evaluated in consideration of human recognition characteristics, the un-response rate to call refers to a probability that an outrage state of audio call occurs, and the R-value refers to a quality index representing a quality that is recognizable by using network environment information within a measurement range.

Secondly, a user experience quality parameter for a video streaming service includes initial buffering time, jerkiness, audio and video synchronization, etc. The initial buffering time refers to a time period between from when a user requires a video streaming service and when the user receives an initial service, following buffering of predetermined data, and the jerkiness refers to a measurement value about continuation of video stopped image or a degree that motions are viewed as being not naturally continuous.

Thirdly, a user experience quality parameter for a WEB browsing service includes a page response time, etc. The page response time refers to a time period between when a user requires a WEB page and when the user receives a corresponding page.

Fourthly, a user experience quality parameter for a file exchange service includes a data rate, a download time, etc. The data rate refers to a data transmission rate per unit time, and the download time refers to a total time for receiving a required file.

Then, an interior structure of UE of a communication system according to an embodiment of the present invention will now be described in detail with reference to FIGS. 2 to 5.

FIG. 2 is a diagram illustrating an example of an interior structure of UE of a communication system according to an embodiment of the present invention.

Referring to FIG. 2, the UE includes a session characteristics determination unit 211, a path characteristics determination unit 213, and a session connection controller 215. The session characteristics determination unit 211 determines characteristics of at least one session selected from the group consisting of a transport layer, a network layer, and a physical layer. That is, to supply a user requirement service, the session characteristics determination unit 211 determines at least one session selected from the group consisting of a transport layer, a network layer, and a physical layer. The path characteristics determination unit 213 elects a transmission path for connection of at least one session selected from the group consisting of a transport layer, a network layer, and a physical layer, and determines characteristics of the elected transmission path. That is, the path characteristics determination unit 213 elects a transmission path for connection of a session of which characteristics are determined by the session characteristics determination unit 211, and determines characteristics of the elected transmission path. In this regard, the characteristics of the transmission path may include a session size according to a path, a transmission characteristic according to a path, etc.

The session connection controller 215 controls connection of at least one session selected from the group consisting of a transport layer, a network layer, and a physical layer. That is, the session connection controller 215 controls at least one operation selected from the group consisting of session establishment, session close, session change, and session connection for connection of a session of which characteristics are determined by the session characteristics determination unit 211 by using a transmission path that is elected by the path characteristics determination unit 213. Detailed descriptions of the session establishment, the session close, the session change, and the session connection will be described in detail later.

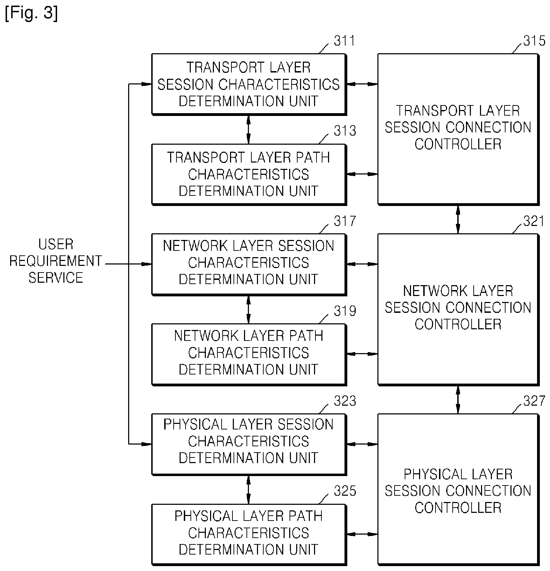

As described above, in the UE interior structure illustrated in FIG. 2, all the layers commonly share one session characteristics determination unit, one path characteristics determination unit, and one session connection controller. However, the UE interior structure illustrated in FIG. 2, each of the layers may include a session characteristics determination unit, a path characteristics determination unit, and a session connection controller, and this embodiment will now be described in detail with reference to FIG. 3.

FIG. 3 is a diagram illustrating another example of the UE interior structure of a communication system according to an embodiment of the present invention.

Referring to FIG. 3, the UE includes a transport layer session characteristics determination unit 311, a transport layer path characteristics determination unit 313, transport layer session connection controller 315, a network layer session characteristics determination unit 317, a network layer path characteristics determination unit 319, a network layer session connection controller 321, a physical layer session characteristics determination unit 323, a physical layer path characteristics determination unit 325, and a physical layer session connection controller 327. The transport layer session characteristics determination unit 311 determines characteristics of a session of a transport layer to supply a user requirement service.

The transport layer path characteristics determination unit 313 elects a transmission path for a session of a transport layer, and determines characteristics of the elected transmission path. That is, the transport layer path characteristics determination unit 313 elects a transmission path for connection of a session of which characteristics are determined by the transport layer session characteristics determination unit 311, and determines characteristics of the elected transmission path.

The transport layer session connection controller 315 controls connection of a session of a transport layer. That is, the transport layer session connection controller 315 controls at least one operation selected from the group consisting of session establishment, session close, session change, session connection for connection of a session of which characteristics are determined by the transport layer session characteristics determination unit 311 by using a transmission path that is elected by the transport layer path characteristics determination unit 313.

The network layer session characteristics determination unit 317 determines characteristics of a network layer to supply a user requirement service.

The network layer path characteristics determination unit 319 elects a transmission path for a session of a network layer, and determines characteristics of the elected transmission path. That is, the network layer path characteristics determination unit 319 elects a transmission path for a session of which characteristics are determined by the network layer session characteristics determination unit 317, and determines characteristics of the elected transmission path.

The network layer session connection controller 321 controls connection of a session of a network layer. That is, the network layer session connection controller 321 controls at least one operation selected from the group consisting of session establishment, session close, session change, session connection for connection of a session of which characteristics are determined by the network layer session characteristics determination unit 317 by using a transmission path that is elected by the network layer path characteristics determination unit 319.

The physical layer session characteristics determination unit 323 determines characteristics of a session of a physical layer to supply a user requirement service.

The physical layer path characteristics determination unit 325 elects a transmission path for a session of a physical layer, and determines characteristics of the elected transmission path. That is, the physical layer path characteristics determination unit 325 elects a transmission path for a session of which characteristics are determined by the physical layer session characteristics determination unit 323, and determines characteristics of the elected transmission path.

The physical layer session connection controller 327 controls connection of a session of a physical layer. That is, the physical layer session connection controller 327 controls at least one operation selected from the group consisting of session establishment, session close, session change, and session connection for connection of a session of which characteristics are determined by the physical layer session characteristics determination unit 323 by using a transmission path that is elected by the physical layer path characteristics determination unit 325.

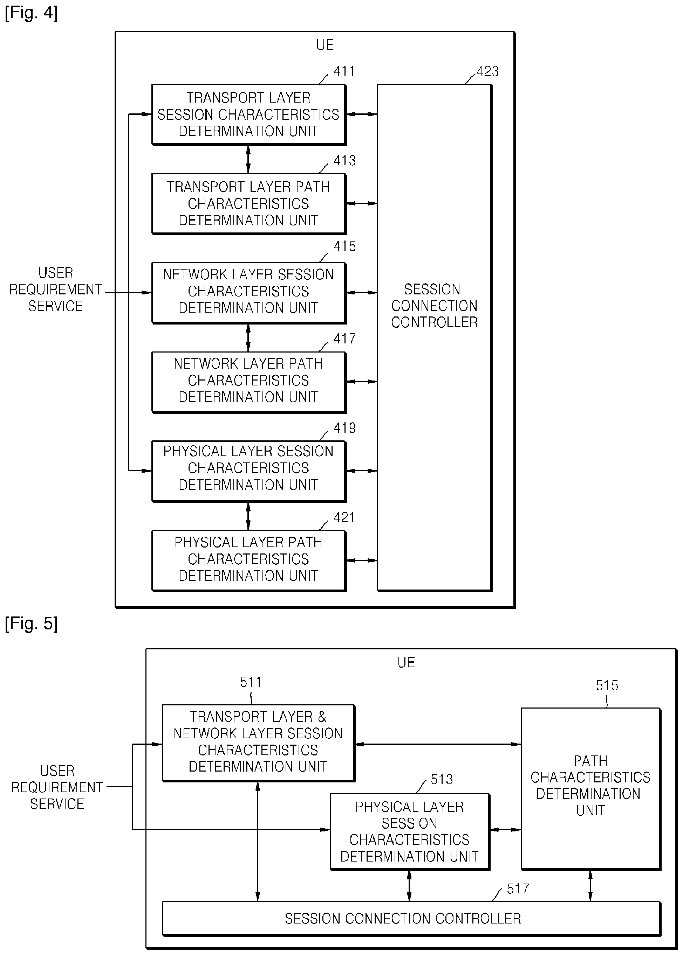

As described above, in the UE interior structure illustrated in FIG. 3, each of the layers includes a session characteristics determination unit, a path characteristics determination unit, and a session connection controller. However, unlike the UE interior structure illustrated in FIG. 3, each of the layers may include a session characteristics determination unit and a path characteristics determination unit, and all the layers may commonly share one session connection controller. This embodiment will now be described with reference to FIG. 4.

FIG. 4 is a diagram illustrating another example of the UE interior structure of a communication system according to an embodiment of the present invention.

Referring to FIG. 4, the UE includes a transport layer session characteristics determination unit 411, a transport layer path characteristics determination unit 413, a network layer session characteristics determination unit 415, a network layer path characteristics determination unit 417, a physical layer session characteristics determination unit 419, a physical layer path characteristics determination unit 421, and a session connection controller 423. The transport layer session characteristics determination unit 411 determines characteristics of a session of a transport layer to supply a user requirement service.

The transport layer path characteristics determination unit 413 elects a transmission path for a session of a transport layer, and determines characteristics of the elected transmission path. That is, the transport layer path characteristics determination unit 413 elects a transmission path for connection of a session of which characteristics are determined by the transport layer session characteristics determination unit 411, and determines characteristics of the elected transmission path. The network layer session characteristics determination unit 415 determines characteristics of a network layer to supply a user requirement service.

The network layer path characteristics determination unit 417 elects a transmission path for a session of a network layer, and determines characteristics of the elected transmission path. That is, the network layer path characteristics determination unit 417 elects a transmission path for a session of which characteristics are determined by the network layer session characteristics determination unit 415, and determines characteristics of the elected transmission path.

The physical layer session characteristics determination unit 419 determines characteristics of a session of a physical layer to supply a user requirement service.

The physical layer path characteristics determination unit 421 elects a transmission path for a session of a physical layer, and determines characteristics of the elected transmission path. That is, the physical layer path characteristics determination unit 421 elects a transmission path for a session of which characteristics are determined by the physical layer session characteristics determination unit 419, and determines characteristics of the elected transmission path. The session connection controller 423 controls connection of at least one session selected from the group consisting of a transport layer, a network layer, and a physical layer. That is, the session connection controller 423 controls connection of at least one session selected from the group consisting of a transport layer, a network layer, and a physical layer for connection of a session of which characteristics are determined by the transport layer session characteristics determination unit 411 by using a transmission path that is elected by the transport layer path characteristics determination unit 413. Also, the session connection controller 423 controls connection of at least one session selected from the group consisting of a transport layer, a network layer, and a physical layer for connection of a session of which characteristics are determined by the network layer session characteristics determination unit 415 by using a transmission path that is elected by the network layer path characteristics determination unit 417. Also, the session connection controller 423 controls connection of at least one session selected from the group consisting of a transport layer, a network layer, and a physical layer for connection of a session of which characteristics are determined by the physical layer session characteristics determination unit 419 by using a transmission path that is elected by the physical layer path characteristics determination unit 421.

As described above, in the UE interior structure illustrated in FIG. 4, each of the layers includes a session characteristics determination unit and a path characteristics determination unit, and all the layers commonly share one session connection controller session connection controller. However, unlike the UE interior structure illustrated in FIG.

4, at least two layers selected from the group consisting of a transport layer, a network layer, and a physical layer may commonly share at least one selected from the group consisting of a session characteristics determination unit, a path characteristics determination unit, and a session connection controller, and at least one layer selected from the group consisting of a transport layer, a network layer, and a physical layer may include a session characteristics determination unit, a path characteristics determination unit, and a session connection controller. This embodiment will now be described with reference to FIG. 5.

FIG. 5 is a diagram illustrating another example of the UE interior structure of a communication system according to an embodiment of the present invention.

Referring to FIG. 5, the UE includes a transport layer & network layer session characteristics determination unit 511, a physical layer session characteristics determination unit 513, a path characteristics determination unit 515, and a session connection controller 517. As illustrated in FIG. 5, a transport layer and a network layer commonly share a session characteristics determination unit, that is, a transport layer & network layer session characteristics determination unit 511, and a physical layer has an independent session characteristics determination unit, that is, a physical layer session characteristics determination unit 513. Also, all the layers commonly share a path characteristics determination unit 515 and a session connection controller 517.

Also, the UE may have interior structures other than the structures illustrated in FIGS. 2 to 5, and these UE interior structures will now be described in detail.

According to an embodiment, each of the layers may include a session characteristics determination unit, all the layers may commonly share one path characteristics determination unit, and each of the layers may include a session connection controller. That is, the UE may include a transport layer session characteristics determination unit, a network layer session characteristics determination unit, a physical layer session characteristics determination unit, a path characteristics determination unit, a transport layer session connection controller, a network layer session connection controller, and a physical layer session connection controller.

According to another embodiment, each of the layers may include a session characteristics determination unit, and all the layers may commonly share one path characteristics determination unit and one session connection controller. That is, the UE may include a transport layer session characteristics determination unit, a network layer session characteristics determination unit, a physical layer session characteristics determination unit, a path characteristics determination unit, and a session connection controller.

According to another embodiment, all the layers may commonly share one session characteristics determination unit, and each of the layers may include a path characteristics determination unit and a session connection controller. That is, the UE may include a session characteristics determination unit, a transport layer path characteristics determination unit, a network layer path characteristics determination unit, a physical layer path characteristics determination unit, a transport layer session connection controller, a network layer session connection controller, and a physical layer session connection controller.

According to another embodiment, all the layers may commonly share one session characteristics determination unit and one session connection controller, and each of the layers may include a path characteristics determination unit. That is, the UE may include a session characteristics determination unit, a transport layer path characteristics determination unit, a network layer path characteristics determination unit, a physical layer path characteristics determination unit, and a session connection controller.

According to another embodiment, all the layers may commonly share one session characteristics determination unit and one path characteristics determination unit, and each of the layers includes a session connection controller. That is, the UE may include a session characteristics determination unit, a path characteristics determination unit, a transport layer session connection controller, a network layer session connection controller, and a physical layer session connection controller.

Hereinafter, operations of a session characteristics determination unit, a path characteristics determination unit, and a session connection controller will be described in detail.

First, an operation of a session characteristics determination unit will now be described in detail.

The session characteristics determination unit determines characteristics of a session of a layer to supply a service, and the characteristics of a session of a layer include a session size, session connection mode (multiplexing, diversity, or a hybrid including multiplexing and diversity), session flexibility (service and traffic, network load, or flexibility corresponding to channel state), QoE parameter, etc. For example, if the session characteristics determination unit, when the flexibility corresponding to channel state is set to a high level, gives a current channel state a margin and determines characteristics of a session relatively generously. Accordingly, even when the channel state is relatively poor, the current session state may be allowed to be maintained as long as the channel state change is within the predetermined range.

The session characteristics determination unit utilizes at least one selected from the group consisting of service characteristics information, communication quality information, network information, channel characteristics information, when the session characteristics determination unit determines characteristics of a session of a layer to supply a user requirement service. In addition, at least two of these may be used in combination. In this regard, the service characteristics information includes user preference, QoE requirement parameter according to a session, service price, etc. Also, the communication quality information may be directly measured and collected by UE, and includes communication quality information of an application layer, communication quality information of a session layer, communication quality information of a transport layer, communication quality information of a network layer, communication quality information of a MAC layer, and communication quality information of a physical layer.

In this regard, the communication quality information of the application layer includes availability, reconstruction quality, time constraint, service price, MOS, data rate, jitter, transfer delay, a peak signal-to-noise ratio (PSNR), etc.; the communication quality information of the session layer includes a session state (normal or abnormal session connection), etc.; the communication quality information of the transport layer includes an end-to-end retransmission rate, end-to-end transfer delay, end-to-end segment loss, end-to-end throughput, segment delay change, etc.; the communication quality information of the network layer includes QoS information, routing information, packet loss, packet transfer delay, packet throughput, etc.; the communication quality information of the MAC layer includes a link retransmission rate, FER, etc.; and the communication quality information of the physical layer includes BER, signal strength, etc.

Also, the network information refers to information supplied by networks with which the UE are to have connection, and includes neighbor list (NL) information, a network load rate, price policy, etc. The channel characteristics information refers to transmission parameter information for network connection of UE, and includes modulation method information, coding method information, transmit and receive method information, multiple antenna method information, etc.

Secondly, an operation of a path characteristics determination unit will now be described in detail.

The path characteristics determination unit elects a transmission path of a session of at least one layer determined by the session characteristics determination unit, and determines characteristics of the elected transmission path. The path characteristics determination unit may elect at least one transmission path from among all transmission paths available between UE and another UE for each layer to supply a user requirement service.

The path characteristics determined by the path characteristics determination unit include a session size according to a path, transmission characteristics according to a path, etc. In this regard, when the path characteristics determination unit determines a session size according to a path, when at least one layer elects at least two paths, to supply a user requirement service, the at least one layer elects determines the session size of each of the paths required to provide the user requirement service. Also, when the path characteristics determination unit determines transmission characteristics according to a path, when at least one layer elects at least two paths, to supply a user requirement service, the at least one layer determines transmission characteristics of each of the path required to provide the user requirement service. In this regard, the transmission characteristics include a transmission order, transmission time, etc.

Thirdly, an operation of a session connection controller will now be described in detail.

The session connection controller controls at least one selected from the group consisting of session establishment, session close, session change, and session connection for connection of a session of at least one layer of which characteristics are determined by the session characteristics determination unit by using at least one path determined by the path characteristics determination unit. Hereinafter, each of the session establishment, the session close, the session change, and the session connection will be described in detail.

(1) Session establishment

The session establishment refers to a process in which UE establishes a session of at least one layer by using at least one path, when data for transmission is generated or when a new user requirement service is required. In this regard, the UE may establish a session of at least one layer by using at least two transmission paths in consideration of characteristics of a session to supply a user requirement service. Also, the session establishment requires a resource allocation process.

(2) Session close

The session close refers to a process in which UE closes a session of at least one layer that is currently established. In this regard, the UE may close the whole or a portion of a transmission path that is established for a session of a corresponding layer. Also, the session close requires a resource return process.

(3) Session change

The session change refers to a process in which UE changes the whole or a portion of transmission paths of at least one layer currently in use to supply a user requirement service, or at least one of session sizes and session characteristics of the whole or a portion of transmission paths of at least one layer currently in use, when there is a need to change a transmission path for connection of a session of at least one layer, for example, when a session of at least one layer currently used by UE does not satisfy a user requirement QoS, or when the session exceeds a user requirement QoS, or when a user requirement QoS is changed.

For example, when a user requirement QoS is changed, the session connection controller may increase or decrease the transmission path size of at least one selected from the group consisting of a transport layer, a network layer, and a physical layer currently in use. Alternatively, when at least one transmission path currently in use is insufficient, a new transmission path of at least one layer may be additionally used, or when transmission paths of at least one layer currently in use are excessive, transmission paths of at least one layer may be closed. In this regard, when the transmission path is changed, the session connection controller may change a transmission path within the same communication network, or may use a transmission path of different communication networks. In this case, the session connection controller may use transmission paths of at least two different communication networks simultaneously.

Also, the session change requires a resource allocation process and a resource return process, and even when the current QoS is changed, if a user requirement service is suppliable with the current session, the current session may be maintained.

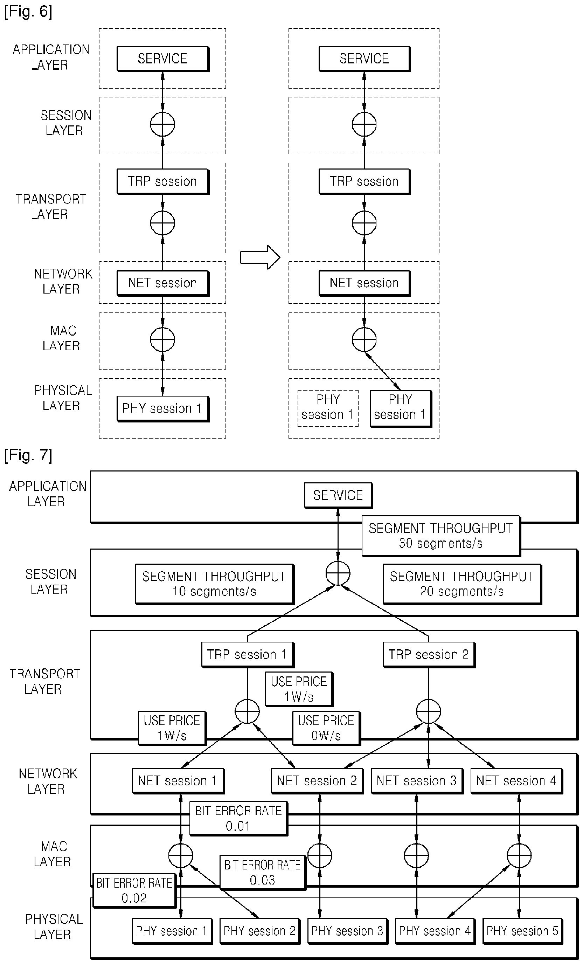

Hereinafter, with reference to FIG. 6, session change performed by UE in a communication system according to an embodiment of the present invention will be described in detail.

FIG. 6 is a schematic diagram illustrating a session change process performed by UE in a communication system according to an embodiment of the present invention.

The session change process illustrated in FIG. 6 is a process for changing a session of a physical layer, and in FIG. 6, the term "TRP session" refers to a transport layer session, the term "NET session" refers to a network layer session, and the term "PHY session" refers to a physical layer session.

Referring to FIG. 6, when during a user requirement service is supplied using a physical layer session 1, it is difficult to supply the user requirement service using the physical layer session 1 due to a particular cause, the US searches for a new physical layer session that enables supply of a user requirement service. In this regard, an example of the particular cause may be a decrease in SNR or an increase in signal transfer delay. That is, when during a user requirement service is supplied using a physical layer session 1, it is difficult to supply the user requirement service using the physical layer session 1 due to a decrease in SNR or an increase in signal transfer delay, the UE searches for a new physical layer session that enables supply of a user requirement service. Also, if the searched physical layer session is a physical layer session 2, the UE performs session change from the physical layer session 1 to the physical layer session 2. Also, although not illustrated in the drawings herein, the UE may change, in addition to a session of a physical layer as described above, a session of a transport layer and a session of a network layer. The latter cases will now be described in detail.

Regarding network layer session change, when during a user requirement service is supplied using a network layer session 1, it is difficult to supply the user requirement service using the network layer session 1 due to a particular cause, the US searches for a new network layer session that enables supply of a user requirement service. In this regard, an example of the particular cause may be an increase in a packet error rate (PER), a high use price, or an increase in packet transfer delay. That is, when during a user requirement service is supplied using a network layer session 1, it is difficult to supply the user requirement service using the network layer session 1 due to an increase in a PER, a high use price, or an increase in packet transfer delay, the US searches for a new network layer session that enables supply of a user requirement service. Also, if the searched network layer session is a network layer session 2, the UE performs session change from the network layer session 1 to the network layer session 2.

Regarding transport layer session change, when during a user requirement service is supplied using a transport layer session 1, it is difficult to supply the user requirement service using the transport layer session 1 due to a particular cause, the US searches for a new transport layer session that enables supply of a user requirement service. In this regard, an example of the particular cause may be an increase in a round trip time (RTT), an increase in retransmission count, or a decrease in segment throughput. That is, when during a user requirement service is supplied using a transport layer session 1, it is difficult to supply the user requirement service using the transport layer session 1 due to an increase in a PER, a high use price, or an increase in packet transfer delay, the US searches for a new transport layer session that enables supply of a user requirement service. Also, if the searched transport layer session is a transport layer session 2, the UE performs session change from the transport layer session 1 to the transport layer session 2.

Hereinafter, a session connection process performed by UE in a communication system according to an embodiment of the present invention will be described in detail.

First, session connection is a process in which UE, to receive a user requirement service, establishes at least two sessions of at least one layer by using at least two transmission paths, and divides and transmits information about the user requirement service at least one layer by using at least two transmission paths, or matches information transmitted to at least one layer through at least two transmission paths.

That is, session connection is a process for dividing at least one session layer session into at least two transport layer sessions, dividing at least one transport layer session into at least two network layer sessions, dividing at least one MAC layer session into at least two physical layer sessions, combining at least two transport layer sessions into a session of at least one session layer, combining at least two network layer sessions into at least one transport layer session, or combining at least two physical layer sessions into at least one MAC layer session.

Also, when in a session establishment process, at least two sessions are established in at least one layer for one user requirement service, a session connection process for combining the at least two sessions is needed. In this regard, when identical information is received by using at least two sessions, the session connection may be performed in a diversity connection manner in which among identical information received using the at least two sessions, only one is elected.

However, when different information is received by using at least two sessions, the session connection may be performed in a multiplexing connection manner in which information received by using the at least two sessions is aligned according to a sequence and then combined into one.

Unlike these cases, when at least two sessions simultaneously receive identical information and different information, the UE performs diversity connection with respect to the identical information and the UE performs multiplexing connection with respect to different information. That is, when at least two sessions are used, the UE performs diversity connection with respect to a portion of at least one session of the at least two sessions and a corresponding residual session by receiving identical information, and the UE performs multiplexing connection with respect to the remaining portion and a corresponding residual session by receiving different information. For example, when a user requirement service is supplied using a transport layer session 1 and a transport layer session 2, the UE performs diversity combination session connection by receiving identical segments through a first sub-session of the transport layer session 1 that has a session size that is 1/3 of the transport layer session 1 and a first sub-session of the transport layer session 2 that has a session size that is 1/2 of the transport layer session 2. Simultaneously, by receiving different segments through a second sub-session of the transport layer session 1 that has a session size of 2/3 of the transport layer session 1, and other different segments through a second sub-session of the transport layer session 2 that has a session size of 1/2 of the transport layer session 2, a segment obtained by diversity combination session connection of segments received through the first sub-session of the transport layer session 1 and the first sub-session of the transport layer session 2 is combined with segments received through the second sub-session of the transport layer session 1 and a segment received through the second sub-session of the transport layer session 2 by multiplexing combination session connection.

According to another embodiment, when a WEB browsing service is supplied using a network layer session 1 and a network layer session 2, the UE performs diversity combination session connection by receiving identical packets that constitute image information of the WEB browsing service through a first sub-session of the transport layer session 1 that has a session size that is 1/2 of the transport layer session 1 and the transport layer session 2. Simultaneously, by receiving packets that constitute text information of the WEB browsing service through a second sub-session of the transport layer session 1 that has a session size of the residual 1/2 of the transport layer session 1, a packet obtained by diversity combination session connection of the packets received through the first sub-session of the network layer session 1 and the network layer session 2 is combined with the packet received through the second sub-session of the network layer session 1 by multiplexing combination session connection.

In this way, data received through a session of a physical layer, in addition to a session of a transport layer and a session of a network layer, may be combined by session connection. Also, when identical information is transmitted using at least two sessions, a session connection process is performed in a diversity division manner in which identical information is divided and transmitted using the at least two sessions. Alternatively, when different information is transmitted using at least two sessions, a session connection process is performed in a multiplexing division manner in which different information is divided and transmitted using the at least two sessions.

Alternatively, identical information and different information are each divided for at least two sessions, and the UE performs diversity transmission with respect to the identical information and the UE performs multiplexing transmission with respect to different information. That is, when at least two sessions are used, the UE performs diversity division session connection with respect to a portion of at least one session of the at least two sessions and a corresponding residual session perform by transmitting identical information therethrough, and the UE performs multiplexing division session connection with respect to the remaining portion and a corresponding residual session perform by transmitting different information. For example, when a user requirement service is supplied using a physical layer session 1 and a physical layer session 2, the UE performs a diversity division session connection with a first sub-session of the physical layer session 1 that has a session size that is 1/2 of the physical layer session 1 and the physical layer session 2 respect to by transmitting identical signals through the first sub-session of the physical layer session 1 and the physical layer session 2. Simultaneously, by transmitting other signals through a second sub-session of the physical layer session 1 that has a session size of the residual 1/2 of the physical layer session 1, a signal obtained by the diversity division session connection of the signals transmitted through the first sub-session of the physical layer session 1 and the physical layer session 2 and the signals transmitted through the second sub-session of the physical layer session 1 are subjected to a multiplexing division session connection.

In this way, data transmitted through a session of a transport layer and a session of a network layer, in addition to the session of the physical layer, are combined by session connection.

Also, for session connection according to a layer, each session includes a session identifier (ID), a sequence number, and an initial sequence number. The session ID, the sequence number, and the sequence number will now be described in detail.

First, the session ID will now be described in detail.

The session ID, when at least one layer generates at least two sessions, indicates an upper session or service that constitutes the at least two sessions, and is needed to recognize that any of the at least two sessions is used for the identical upper session or service in performing session connection by a combiner.

Secondly, the sequence number will now be described in detail.

The sequence number is a sequence number of data streams received using sessions of layers, and is needed to combine data streams received by using at least two sessions into one upper session or service for an identical upper session or service in a combiner.

If identical data streams are received by using at least two sessions, the UE performs a diversity combination session connection by electing one among from identical data streams having the same sequence number, or if different data streams are received by using at least two sessions, the UE performs a multiplexing combination session connection by aligning sequence numbers.

Thirdly, the initial sequence number will now be described in detail.

The initial sequence number indicates a starting sequence number of data streams received by using sessions of layers. The combiner recognizes the initial sequence number and performs session connection using a sequence number of data streams.

Hereinafter, with reference to FIG. 7, a session connection process performed by UE in a communication system according to an embodiment of the present invention will be described in detail.

FIG. 7 is a schematic diagram illustrating a session connection process performed by UE in a communication system according to an embodiment of the present invention.

Referring to FIG. 7, the term "TRP session" refers to a transport layer session which performs a diversity division session connection, the term "NET session" refers to a network layer session, and the term "PHY session" refers to a physical layer session. Referring to FIG. 7, when UE receives signals, one physical layer session may be constituted of one network layer session, for example, a physical layer session 3 is constituted of a network layer session 2. Also, two or more physical layer sessions are combined into one network layer session in a combiner of a MAC layer, and in FIG. 7, a physical layer session 1 and a physical layer session 2 are constituted of a network layer session 1.

Also, one physical layer session may be constituted of at least two network layer sessions, and in FIG. 7, the physical layer session 4 is constituted of a network layer session 3 and a network layer session 4.

Likewise, one network layer session may be constituted of one transport layer session, two or more network layer sessions are combined into one transport layer session in a combiner of a transport layer, and one network layer session may be constituted of at least two transport layer sessions.

Also, one transport layer session may be constituted of one session layer session, and two or more transport layer sessions may be combined into one session layer in a combiner of a session layer.

Also, when UE transmits signals, one network layer session may be constituted of one physical layer session. In FIG. 7, a network layer session 2 is constituted of a physical layer session 3. Also, one network layer session may be divided into two physical layer sessions in a combiner of a MAC layer. In FIG. 7, a network layer session 1 is divided into a physical layer session 1 and a physical layer session 2.

Also, at least two network layer sessions may be constituted of one physical layer session. In FIG. 7, a network layer session 3 and a network layer session 4 are constituted of a physical layer session 4. Likewise, one transport layer session may be constituted of one network layer session, one transport layer session may be divided into two or more network layer sessions in a combiner of a transport layer, and at least two transport layer sessions may be constituted of one network layer session. Also, one session layer session may be constituted of one transport layer session, and one session layer session may be divided into two or more transport layer sessions in a combiner of a session layer.

Also, when UE receives signals, at least one session characteristics may be combined when at least two sessions of at least one layer are combined. In FIG. 7, when the physical layer session 1 and the physical layer session 2 are combined by diversity connection, 0.02 bit error rate characteristics of the physical layer session 1 is combined with 0.03 bit error rate characteristics of the physical layer session 2 to form a session having one 0.01 bit error rate characteristics.

Also, in FIG. 7, when the network layer session 1 and the network layer session 2 are combined by multiplexing connection, 1 Vs use price characteristics of the network layer session 1 is combined with 0 Vs use price characteristics of the network layer session 2 to form a session having one 1 Vs use price characteristics. Also, when the transport layer session 1 and the transport layer session 2 are combined by multiplexing connection, 10 segments/s segment throughput characteristics of the transport layer session 1 is combined with 20 segments/s segment throughput characteristics of the transport layer session 2 to form a session having one 30 segments/s segment throughput characteristics.

As described above, when UE receives signals, during a session connection process, session characteristics of at least two sessions are combined and a session having one session characteristics is formed. Also, in this case, two or more session characteristics may also be combined.

Also, when UE transmits signals, when at least two sessions are combined, at least one session characteristics may be divided. In FIG. 7, when a session layer session is divided by multiplexing, a session layer session having 30 segments/s segment throughput characteristics may be divided into a transport layer session 1 having 10 segments/s segment throughput characteristics and a transport layer session 2 having 20 segments/s segment throughput characteristics.

Also, when the transport layer session 1 is divided by multiplexing, the transport layer session 1 having 1 Vs use price characteristics is divided into the network layer session 1 having 1 Vs use price characteristics and the network layer session 2 having 0 Vs use price characteristics.

Also, when the network layer session 1 is divided by diversity, the network layer session 1 having 0.01 bit error rate characteristics is divided into the physical layer session 1 having 0.02 bit error rate characteristics and the physical layer session 2 having 0.03 bit error rate characteristics.

As described above, when signals are transmitted, during a session connection process, a session characteristic of one session may be divided and the session may be divided into at least two sessions having the divided session characteristics. At least two or more session characteristics may also be divided.

Also, when the physical layer session 1 and physical layer session 2 are combined by diversity, a session having 0.01 bit error rate characteristics is generated by combining 0.02 bit error rate characteristics of the physical layer session 1 and 0.03 bit error rate characteristics of the physical layer session 2.

Also, when at least two physical layer transmission paths are used in the same communication network, at least two physical layer sessions may be combined in a physical layer, or at least two physical layer sessions may be combined in a MAC layer.

In this regard, regarding the session connection, a session connection controller may perform session connection of at least two sessions established in the same communication network, or may perform session connection of at least two sessions established through transmission paths of different communication networks. For example, a session connection controller may combine a network layer session established through LTE and a network layer session established through WLAN into one transport layer session in a combiner of a transport layer.

It should be understood that the exemplary embodiments described therein should be considered in a descriptive sense only and not for purposes of limitation. Descriptions of features or aspects within each embodiment should typically be considered as available for other similar features or aspects in other embodiments.

**Industrial Applicability**

This invention can be used in the field of network communication system.

**Claims**

1. A user equipment, UE, for communication system, comprising
   a session connection controller (215) for
   combining at least two sessions received through different transmission paths into at least one session, or
   dividing at least one session into at least two sessions to be transmitted through different transmission paths,
   wherein the different transmission paths are established through different communication devices in an identical communication network, and
   wherein the different communication device includes at least one of NodeBs, relays, repeaters and femtocell NodeBs;
   the UE **characterized in that:**

   the UE further comprises a session characteristics determination unit (211) for determining characteristics of each of sessions selected from at least one layer,
   wherein each of the at least one layer is selected from the group consisting of a transport layer, a network layer, and a physical layer,
   wherein the session characteristics determination unit (211) determines at least one selected from the group consisting of a session size, a session connection mode, session flexibility, and quality of experience, QoE, of the layer or each of at least two layers selected from the group consisting of a transport layer, a network layer, and a physical layer,
   wherein the session flexibility is a degree of response to change of service and traffic, network load, and a channel state, and

wherein the session connection controller (215) controls at least one selected from the group consisting of session establishment, session close, session change, and session connection for connection of a session of the at least one layer of which characteristics are determined by the session characteristics determination unit (211) by using at least one of the paths, which are determined by a path characteristic determination unit.

2. The UE of claim 1, wherein the session connection controller (215) is configured to combine at least two sessions of at least two transport layers into at least one session of at least one session layer; to combine at least two sessions of at least two network layers into at least one session of at least one transport layer; to combine at least two sessions of at least two physical layers into at least one session of at least one medium access control, MAC, layer or at least one session of at least one physical layer; to divide at least one session of at least one session layer into at least two sessions of at least two transport layers; to divide at least one session of at least one transport layer into at least two sessions of at least two network layers; or to divide at least one session of at least one MAC layer or at least one session of at least one physical layer into at least two sessions of at least two physical layers.

3. The UE of claim 1, wherein the session connection controller (215) is configured:

To perform diversity combination in which identical information is received through at least two sessions of a layer or each of at least two layers selected from the group consisting of a transport layer, a network layer, and a physical layer and combined, or identical information is divided and transmitted to at least two sessions, or to perform multiplexing combination in which different information are received through at least two sessions and combined, or different information is divided and transmitted to at least two sessions, or to receive identical information and different information simultaneously through at least two sessions, and to perform diversity connection with the identical information and to perform multiplexing connection with the different information, or to divide each of identical information and different information for at least two sessions, and to perform diversity transmission with the identical information and to perform multiplexing transmission with the different information.

4. The UE of claim 1, wherein the QoE comprises quality of service, QoS, and user experience quality, the session connection mode comprises multiplexing, diversity, and hybrid including multiplexing and diversity, the session flexibility comprises service and traffic, network load, and flexibility corresponding to a channel state, and the QoS comprises data rate, transfer delay, and packet loss, and the user experience quality comprises a mean opinion score, MOS, an un-response rate to call, R-Value, initial buffering time, and download time.

5. The UE of claim 1, wherein the session characteristics determination unit (211) determines characteristics of each of sessions selected from at least one layer, wherein each of at least one layer is selected from the group consisting of a transport layer, a network layer, and a physical layer by combining one or at least two selected from the group consisting of service characteristics information, communication quality information, channel characteristics information.

6. The UE of claim 5, wherein the service characteristics information comprises at least one selected from the group consisting of user preference, quality of experience, QoE, requirement parameter according to a session, and service price, the communication quality information comprises at least one selected from the group consisting of application layer information, session layer information, transport layer information, network layer information, medium access control, MAC, information, and physical layer information, the application layer information comprises availability, reconstruction quality, time constraint, service price, data rate, jitter, transfer delay, and a peak signal-to-noise ratio (PSNR), the session layer information comprises a session state, the transport layer information comprises end-to-end retransmission rate, end-to-end transfer delay, end packet loss, end-to-end throughput, and packet delay change, the network layer information comprises quality of service, QoS, information and routing information, the MAC layer information comprises a link retransmission rate, and a frame error rate, the physical layer information comprises a bit error rate, and signal strength, the network information is information that is supplied by networks with which the UE is to have a connection, and comprises a neighbor list, NL, information, a network load rate, and a price policy, and the channel characteristics information is transmission information for network connection of the UE, and comprises modulation method information, coding method information, transmit and receive method information, multiple antenna method information.

7. The UE of claim 1, wherein the session characteristics determination unit (211) determines session size of each of at least one layer selected from the group consisting of a transport layer, a network layer, and a physical layer, wherein the session size is a size of the transmission path for exchanging data stream, packet, or signal in each layer to supply a user requirement service.

8. The UE of claim 7, wherein the session size of the transport layer is a segment throughput, the session size of the network layer is a packet throughput, and the session size of the physical layer is a channel capacity.

9. The UE of claim 1, wherein the session characteristics determination unit (211) determines session flexibility of each of at least one layer selected from the group consisting of a transport layer, a network layer, and a physical layer, wherein the session flexibility is a degree of response to change of service and traffic, network load, and a channel state.

10. The UE of claim 1, wherein the session characteristics determination unit (211) determines a quality of service, QoS, parameter of each of at least one layer selected from the group consisting of a transport layer, a network layer, and a physical layer,
wherein the QoS parameter of the transport layer comprises segment transfer delay, retransmission count, segment throughput, round trip time, RTT, and segment loss,
the QoS parameter of the network layer comprises jitter, packet transfer delay, packet loss, packet throughput, and use price, and
the QoS parameter of the physical layer comprises a received signal strength indicator, RSSI,, signal-to-noise ratio, SNR, a signal-to-interference plus noise ratio, SINR,, a channel capacity, a data rate, a error rate, an outrage rate, and signal transfer delay.

11. The UE of claim 1, wherein the session characteristics determination unit (211) determines a user experience quality parameter of each of at least one layer selected from the group consisting of a transport layer, a network layer, and a physical layer,
the user experience quality parameter for an audio service comprises mean opinion score, MOS,, an un-response rate to call, and R-value,
the user experience quality parameter for a video streaming service comprises initial buffering time, jerkiness, and audio and video synchronization,
the user experience quality parameter for a WEB browsing service comprises a page reaction time,
the user experience quality parameter for a file exchange service comprises data rate, and download time.

12. The UE of claim 1, wherein the UE further comprises a path characteristics determination unit (213) configured to elect a transmission path for session connection of each of at least one layer selected from the group consisting of a transport layer, a network layer, and a physical layer, and
to determine characteristics of the elected transmission path.

13. The UE of claim 12, wherein the path characteristics determination unit (213) determines a transmission path, the number of paths, a session size according to a path, and transmission characteristics according to a path of the layer or each of at least two layers selected from the group consisting of a transport layer, a network layer, and a physical layer,
wherein the transmission characteristics according to a path comprise throughput, delay, error rate, and loss rate according to a path.

**Patentansprüche**

1. Anwenderausrüstung, UE, für ein Kommunikationssystem, umfassend
eine Sitzungsverbindungssteuerung (215) zum
Kombinieren von mindestens zwei Sitzungen, die durch unterschiedliche Übertragungspfade in mindestens einer Sitzung empfangen werden, oder
Teilen mindestens einer Sitzung in mindestens zwei Sitzungen, die durch unterschiedliche Übertragungspfade zu übertragen sind,
wobei die unterschiedlichen Übertragungspfade durch unterschiedliche Kommunikationsvorrichtungen in einem identischen Kommunikationsnetzwerk eingerichtet sind und
wobei die unterschiedliche Kommunikationsvorrichtung mindestens eines von NodeBs, Relais, Repeatern und Femtozellen-NodeBs beinhaltet; die UE **dadurch gekennzeichnet, dass:**

die UE weiter eine Sitzungseigenschaftsermittlungseinheit (211) zum Ermitteln von Eigenschaften jeder von Sitzungen umfasst, die aus mindestens einer Schicht ausgewählt sind,

wobei jede der mindestens einen Schicht aus der Gruppe ausgewählt ist, bestehend aus einer Transportschicht, einer Netzwerkschicht und einer physischen Schicht,

wobei die Sitzungseigenschaftsermittlungseinheit (211) mindestens eines ermittelt, ausgewählt aus der Gruppe, bestehend aus einer Sitzungsgröße, einem Sitzungsverbindungsmodus, Sitzungsflexibilität und Erfahrungsqualität, QoE, der Schicht oder jeder von mindestens zwei Schichten, die aus der Gruppe ausgewählt sind, bestehend aus einer Transportschicht, einer Netzwerkschicht und einer physischen Schicht,

wobei die Sitzungsflexibilität ein Grad von Antwort auf Änderung von Dienst und Verkehr, Netzwerklast und einem Kanalzustand ist, und

wobei die Sitzungsverbindungssteuerung (215) mindestens eines steuert, ausgewählt aus der Gruppe, bestehend aus Sitzungseinrichtung, Sitzungsabschluss, Sitzungsänderung und Sitzungsverbindung zur Verbindung einer Sitzung der mindestens einen Schicht, deren Eigenschaften durch die Sitzungseigenschaftsermittlungseinheit (211) ermittelt sind, indem mindestens einer der Pfade verwendet wird, die durch eine Pfadeigenschaftsermittlungseinheit ermittelt sind.

2. UE nach Anspruch 1, wobei die Sitzungsverbindungssteuerung (215) konfiguriert ist, mindestens zwei Sitzungen von mindestens zwei Transportschichten in mindesten seine Sitzung von mindestens einer Sitzungsschicht zu kombinieren;

mindestens zwei Sitzungen von mindestens zwei Netzwerkschichten in mindestens eine Sitzung von mindestens einer Transportschicht zu kombinieren;

mindestens zwei Sitzungen von mindestens zwei physischen Schichten in mindestens eine Sitzung von mindestens einer Medienzugriffssteuerung-, MAC, -Schicht oder mindestens eine Sitzung von mindestens einer physischen Schicht zu kombinieren;

mindestens eine Sitzung von mindestens einer Sitzungsschicht in mindestens zwei Sitzungen von mindestens zwei Transportschichten zu teilen;

mindestens eine Sitzung von mindestens einer Transportschicht in mindestens zwei Sitzungen von mindestens zwei Netzwerkschichten zu teilen; oder

mindestens eine Sitzung von mindestens einer MAC-Schicht oder mindestens eine Sitzung von mindestens einer physischen Schicht in mindestens zwei Sitzungen von mindestens zwei physischen Schichten zu teilen.

3. UE nach Anspruch 1, wobei die Sitzungsverbindungssteuerung (215) konfiguriert ist:

Diversitätskombination durchzuführen, in der identische Informationen durch mindestens zwei Sitzungen einer Schicht oder jeder von mindestens zwei Schichten, die aus der Gruppe ausgewählt sind, bestehend aus einer Transportschicht, einer Netzwerkschicht und einer physischen Schicht, empfangen und kombiniert werden oder identische Informationen geteilt und an mindestens zwei Sitzungen übertragen werden, oder

Multiplexkombination durchzuführen, in der unterschiedliche Informationen durch mindestens zwei Sitzungen empfangen und kombiniert werden oder unterschiedliche Informationen geteilt und an mindestens zwei Sitzungen übertragen werden, oder

identische Informationen und unterschiedliche Informationen gleichzeitig durch mindestens zwei Sitzungen zu empfangen und Diversitätsverbindung mit den identischen Informationen durchzuführen und Multiplexverbindung mit den unterschiedlichen Informationen durchzuführen, oder

alle von identischen Informationen und unterschiedlichen Informationen für mindestens zwei Sitzungen zu teilen und Diversitätsübertragung mit den identischen Informationen durchzuführen und Multiplexübertragung mit den unterschiedlichen Informationen durchzuführen.

4. UE nach Anspruch 1, wobei die QoE Dienstleistungsqualität, QoS, und Anwendererfahrungsqualität umfasst, der Sitzungsverbindungsmodus Multiplexing, Diversität und Hybrid, Multiplexing und Diversität beinhaltend, umfasst, die Sitzungsflexibilität Dienst und Verkehr, Netzwerklast und Flexibilität entsprechend einem Kanalzustand umfasst, und

die QoS Datenrate, Transferverzögerung und Paketverlust umfasst und die Anwendererfahrungsqualität eine mittlere Bewertung, MOS, einer Nicht-Antwortzeit auf Anruf, R-Wert, Anfangspufferzeit und Download-Zeit umfasst.

5. UE nach Anspruch 1, wobei die Sitzungseigenschaftsermittlungseinheit (211) Eigenschaften von jeder von Sitzungen, die aus mindestens einer Schicht ausgewählt sind, wobei jede von mindestens einer Schicht aus der Gruppe ausgewählt ist, bestehend aus einer Transportschicht, einer Netzwerkschicht und einer physischen Schicht, durch Kombinieren einer oder von mindestens zwei, ausgewählt aus der Gruppe, bestehend aus Diensteigenschaftsinformationen, Kommunikationsqualitätsinformationen, Kanaleigenschaftsinformationen, ermittelt.

6. UE nach Anspruch 5, wobei die Diensteigenschaftsinformationen mindestens eines umfasst, ausgewählt aus der Gruppe, bestehend aus Anwenderpräferenz, Erfahrungsqualität, QoE, Anforderungsparameter gemäß einer Sitzung und Dienstpreis,
die Kommunikationsqualitätsinformationen mindestens eines umfasst, ausgewählt aus der Gruppe, bestehend aus Anwendungsschichtinformationen, Sitzungsschichtinformationen, Transportschichtinformationen, Netzwerkschichtinformationen, Medienzugriffssteuerung-, MAC, -Informationen und physischen Schichtinformationen, die Anwendungsschichtinformationen Verfügbarkeit, Rekonstruktionsqualität, Zeitbeschränkung, Dienstpreis, Datenrate, Jitter, Transferverzögerung und ein Spitzen-Signal-zu-Rauschen-Verhältnis (PSNR) umfassen, die Sitzungsschichtinformationen einen Sitzungszustand umfassen, die Transportschichtinformationen Ende-zu-Ende-Neuübertragungsrate, Ende-zu-Ende-Transferverzögerung, Endpaketverlust, Ende-zu-Ende-Durchsatz und Paketverzögerungsänderung umfassen, die Netzwerkschichtinformationen Dienstleistungsqualität-, QoS, -Informationen und Weiterleitungsinformationen umfassen, die MAC-Schicht-Informationen eine Linkneuübertragungsrate und eine Framefehlerrate umfassen, die physischen Schichtinformationen eine Bitfehlerrate und Signalstärke umfassen, die Netzwerkinformationen Informationen sind, die durch Netzwerke zugeführt werden, mit denen die UE eine Verbindung aufweisen wird, und Nachbarlisten-, NL,-Informationen, eine Netzwerklastrate und eine Preisrichtlinie umfassen, und
die Kanaleigenschaftsinformationen Übertragungsinformationen für Netzwerkverbindung der UE sind und Modulationsverfahrensinformationen, Codierungsverfahrensinformationen, Übertragungs- und Empfangsverfahrensinformationen, Mehrfachantennenverfahrensinformationen umfassen.

7. UE nach Anspruch 1, wobei die Sitzungseigenschaftsermittlungseinheit (211) Sitzungsgröße von jeder von mindestens einer Schicht, ausgewählt aus der Gruppe, bestehend aus einer Transportschicht, einer Netzwerkschicht und einer physischen Schicht, ermittelt, wobei die Sitzungsgröße eine Größe des Übertragungspfads zum Austausch von Datenstrom, Paket oder Signal in jeder Schicht ist, um einen Anwenderanforderungsdienst zu liefern.

8. UE nach Anspruch 7, wobei die Sitzungsgröße der Transportschicht ein Segmentdurchsatz ist, die Sitzungsgröße der Netzwerkschicht ein Paketdurchsatz ist und die Sitzungsgröße der physischen Schicht eine Kanalkapazität ist.

9. UE nach Anspruch 1, wobei die Sitzungseigenschaftsermittlungseinheit (211) Sitzungsflexibilität von jeder von mindestens einer Schicht ermittelt, ausgewählt aus der Gruppe, bestehend aus einer Transportschicht, einer Netzwerkschicht und einer physischen Schicht,
wobei die Sitzungsflexibilität ein Grad von Antwort auf Änderung von Dienst und Verkehr, Netzwerklast und einem Kanalzustand ist.

10. UE nach Anspruch 1, wobei die Sitzungseigenschaftsermittlungseinheit (211) einen Dienstleistungsqualität-, QoS, -Parameter von jeder von mindestens einer Schicht ermittelt, ausgewählt aus der Gruppe, bestehend aus einer Transportschicht, einer Netzwerkschicht und einer physischen Schicht,
wobei der QoS-Parameter der Transportschicht Segmenttransferverzögerung, Neuübertragungszählung, Segmentdurchsatz, Umlaufzeit, RTT, und Segmentverlust umfasst,
der QoS-Parameter der Netzwerkschicht Jitter, Pakettransferverzögerung, Paketverlust, Paketdurchsatz und Verwendungspreis umfasst, und
der QoS-Parameter der physischen Schicht einen empfangenen Signalstärkeindikator, RSSI, Signal-zu-Rauschen-Verhältnis, SNR, ein Signal-zu-Interferenz plus Rauschen-Verhältnis, SINR, eine Kanalkapazität, eine Datenrate, eine Fehlerrate, eine Ausschreitungsrate und eine Signaltransferverzögerung umfasst.

11. UE nach Anspruch 1, wobei die Sitzungseigenschaftsermittlungseinheit (211) einen Anwendererfahrungsqualitätsparameter von jeder von mindestens einer Schicht ermittelt, ausgewählt aus der Gruppe, bestehend aus einer Transportschicht, einer Netzwerkschicht und einer physischen Schicht,
der Anwendererfahrungsqualitätsparameter für einen Audiodienst mittlere Bewertung, MOS, eine Nicht-Antwortrate auf Anruf und R-Wert umfasst,
der Anwendererfahrungsqualitätsparameter für einen Videostreaming-Dienst Anfangspufferzeit, Ruckartigkeit und Ton- und Bildsynchronisation umfasst,
der Anwendererfahrungsqualitätsparameter für einen WEB-Browsing-Dienst eine Seitenreaktionszeit umfasst,
der Anwendererfahrungsqualitätsparameter für einen Dateienaustauschdienst Datenrate und Downloadzeit umfasst.

**12.** UE nach Anspruch 1, wobei die UE weiter eine Pfadeigenschaftsermittlungseinheit (213) umfasst, die konfiguriert ist, einen Übertragungspfad für Sitzungsverbindung von jeder von mindestens einer Schicht zu wählen, ausgewählt aus der Gruppe, bestehend aus einer Transportschicht, einer Netzwerkschicht und einer physischen Schicht, und Eigenschaften des gewählten Übertragungspfads zu ermitteln.

**13.** UE nach Anspruch 12, wobei die Pfadeigenschaftsermittlungseinheit (213) einen Übertragungspfad, die Zahl von Pfaden, eine Sitzungsgröße gemäß einem Pfad und Übertragungseigenschaften gemäß einem Pfad der Schicht oder jeder von mindestens zwei Schichten, ausgewählt aus der Gruppe, bestehend aus einer Transportschicht, einer Netzwerkschicht und einer physischen Schicht, ermittelt,
wobei die Übertragungseigenschaften gemäß einem Pfad Durchsatz, Verzögerung, Fehlerrate und Verlustrate gemäß einem Pfad umfassen.

**Revendications**

**1.** Équipement utilisateur, UE, pour un système de communication, comprenant
un dispositif de commande de connexion de session (215) pour combiner au moins deux sessions reçues via des chemins de transmission différents en au moins une session, ou
diviser au moins une session en au moins deux sessions à transmettre via des chemins de transmission différents,
dans lequel les chemins de transmission différents sont établis via des dispositifs de communication différents dans un réseau de communication identique, et
dans lequel le dispositif de communication différent inclut au moins un parmi des noeuds B, des relais, des répétiteurs et des nœuds B femtocell ; l'UE **caractérisé en ce que** :

l'UE comprend en outre une unité de détermination de caractéristiques de session (211) pour déterminer des caractéristiques de chacune parmi des sessions choisies à partir d'au moins une couche,
dans lequel chacune parmi l'au moins une couche est choisie dans le groupe consistant en une couche transport, une couche réseau, et une couche physique,
dans lequel l'unité de détermination de caractéristiques de session (211) détermine au moins un choisi dans le groupe consistant en une taille de session, un mode de connexion de session, une flexibilité de session, et une qualité d'expérience, QoE, de la couche ou de chacune parmi au moins deux couches choisies dans le groupe consistant en une couche transport, une couche réseau, et une couche physique,
dans lequel la flexibilité de session est un degré de réponse au changement de service et de trafic, à la charge réseau, et à un état de canal, et
dans lequel le dispositif de commande de connexion de session (215) commande au moins un choisi dans le groupe consistant en un établissement de session, une fermeture de session, un changement de session, et une connexion de session pour une connexion d'une session de l'au moins une couche dont des caractéristiques sont déterminées par l'unité de détermination de caractéristiques de session (211) en utilisant au moins un des chemins, qui sont déterminés par une unité de détermination de caractéristique de chemin.

**2.** UE selon la revendication 1, dans lequel le dispositif de commande de connexion de session (215) est configuré
pour combiner au moins deux sessions d'au moins deux couches transport en au moins une session d'au moins une couche session ;
pour combiner au moins deux sessions d'au moins deux couches réseau en au moins une session d'au moins une couche transport ;
pour combiner au moins deux sessions d'au moins deux couches physiques en au moins une session d'au moins une couche de commande d'accès au support, MAC, ou en au moins une session d'au moins une couche physique ;
pour diviser au moins une session d'au moins une couche session en au moins deux sessions d'au moins deux couches transport ;
pour diviser au moins une session d'au moins une couche transport en au moins deux sessions d'au moins deux couches réseau ; ou
pour diviser au moins une session d'au moins une couche de MAC ou au moins une session d'au moins une couche physique en au moins deux sessions d'au moins deux couches physiques.

**3.** UE selon la revendication 1, dans lequel le dispositif de commande de connexion de session (215) est configuré :

pour effectuer une combinaison de diversité dans laquelle des informations identiques sont reçues via au moins deux sessions d'une couche ou chacune d'au moins deux couches choisies dans le groupe consistant en une couche transport, une couche réseau, et une couche physique et des combinaisons, ou des informations identiques sont divisées et transmises à au moins deux sessions, ou

pour effectuer une combinaison de multiplexage dans laquelle des informations différentes sont reçues via au moins deux sessions et combinées, ou des informations différentes sont divisées et transmises à au moins deux sessions, ou

pour recevoir des informations identiques et des informations différentes simultanément via au moins deux sessions, et pour effectuer une connexion de diversité avec les informations identiques et pour effectuer une connexion de multiplexage avec les informations différentes, ou

pour diviser chacune parmi des informations identiques et des informations différentes pour au moins deux sessions, et pour effectuer une transmission de diversité avec les informations identiques et pour effectuer une transmission de multiplexage avec les informations différentes.

4. UE selon la revendication 1, dans lequel la QoE comprend la qualité de service, QoS, et la qualité d'expérience utilisateur,

le mode de connexion de session comprend le multiplexage, la diversité, et l'hybride incluant multiplexage et diversité, la flexibilité de session comprend le service et le trafic, la charge réseau, et la flexibilité correspondant à un état de canal, et

la QoS comprend le débit de données, le délai de transfert, et la perte de paquet, et la qualité d'expérience utilisateur comprend un score d'opinion moyen, MOS, le débit de non-réponse à l'appel, la valeur R, le temps de tamponnage initial, et le temps de téléchargement.

5. UE selon la revendication 1, dans lequel l'unité de détermination de caractéristiques de session (211) détermine des caractéristiques de chacune parmi des sessions choisies dans au moins une couche, dans lequel chacune parmi au moins une couche est choisie dans le groupe consistant en une couche transport, une couche réseau, et une couche physique en combinant une ou au moins deux choisies dans le groupe consistant en des informations de caractéristiques de service, des informations de qualité de communication, des informations de caractéristiques de canal.

6. UE selon la revendication 5, dans lequel les informations de caractéristiques de service comprennent au moins un choisi dans le groupe consistant en une préférence utilisateur, une qualité d'expérience, QoE, un paramètre d'exigence selon une session, et un prix de service,

les informations de qualité de communication comprennent au moins un choisi dans le groupe consistant en des informations de couche d'application, des informations de couche session, des informations de couche transport, des informations de couche réseau, des informations de commande d'accès au support, MAC, et des informations de couche physique, les informations de couche d'application comprennent une disponibilité, une qualité de reconstruction, une contrainte de temps, un prix de service, un débit de données, une gigue, un délai de transfert, et un rapport signal de crête/bruit (PSNR), les informations de couche transport comprennent un débit de retransmission intégrale, un délai de transfert intégral, une perte de paquet de fin, un rendement intégral, et un changement de délai de paquet, les informations de couche réseau comprennent des informations de qualité de service, QoS, et des informations de routage, les informations de MAC comprennent un débit de retransmission de lien, et un débit d'erreur sur les trames, les informations de couche physique comprennent un débit d'erreur sur les bits, et une force de signal,

les informations réseau sont des informations qui sont fournies par des réseaux avec lesquels l'UE doit présenter une connexion, et comprennent des informations de liste de voisins, NL, un débit de charge réseau, et une politique des prix, et

les informations de caractéristiques de canal sont des informations de transmission pour une connexion réseau de l'UE, et comprennent des informations de procédé de modulation, des informations de procédé de codage, des informations de procédé de transmission et de réception, des informations de procédé à antennes multiples.

7. UE selon la revendication 1, dans lequel l'unité de détermination de caractéristiques de session (211) détermine la taille de session de chacune parmi au moins une couche choisie dans le groupe consistant en une couche transport, une couche réseau, et une couche physique,

dans lequel la taille de session est une taille de chemin de transmission pour échanger des flux de données, un paquet, ou un signal dans chaque couche pour fournir un service d'exigence utilisateur.

8. UE selon la revendication 7, dans lequel la taille de session de la couche transport est un rendement de segment, la taille de session de la couche réseau est un rendement de paquet, et la taille de session de la couche physique est une capacité de canal.

9. UE selon la revendication 1, dans lequel l'unité de détermination de caractéristiques de session (211) détermine une flexibilité de session de chacune parmi au moins une couche choisie dans le groupe consistant en une couche transport, une couche réseau, et une couche physique,
dans lequel la flexibilité de session est un degré de réponse au changement de service et de trafic, à la charge réseau, et à un état de canal.

10. UE selon la revendication 1, dans lequel l'unité de détermination de caractéristiques de session (211) détermine un paramètre de qualité de service, QoS, de chacune parmi au moins une couche choisie dans le groupe consistant en une couche transport, une couche réseau, et une couche physique,
dans lequel la paramètre de QoS de la couche transport comprend un délai de transfert de segment, un décompte de retransmission, un rendement de segment, un temps aller-retour, RTT, et une perte de segment,
le paramètre de QoS de la couche réseau comprend un gigue, un délai de transfert de paquet, une perte de paquet, un rendement de paquet, et un prix d'utilisation, et
le paramètre de QoS de la couche physique comprend un indicateur de force de signal reçu, RSSi,, un rapport signal-bruit, SNR, un rapport de puissance signal sur interférence plus bruit, SINR,, une capacité de canal, un débit de données, un débit d'erreurs, un débit d'indignations, et un délai de transfert de signal.

11. UE selon la revendication 1, dans lequel l'unité de détermination de caractéristiques de session (211) détermine un paramètre de qualité d'expérience utilisateur de chacune parmi au moins une couche choisie dans le groupe consistant en une couche transport, une couche réseau, et une couche physique,
le paramètre de qualité d'expérience utilisateur pour un service audio comprend un score d'opinion moyen, MOS,, un débit de non-réponse à l'appel, et une valeur R,
le paramètre de qualité d'expérience utilisateur pour un service de diffusion vidéo comprend un temps de tamponnage initial, un hachage, et une synchronisation audio et vidéo,
le paramètre de qualité d'expérience utilisateur pour un service de navigation sur le Web comprend un temps de réaction de page,
le paramètre de qualité d'expérience utilisateur pour un service d'échange de fichier comprend un débit de données, et un temps de téléchargement.

12. UE selon la revendication 1, dans lequel l'UE comprend en outre une unité de détermination de caractéristique de chemin (213) configurée
pour élire un chemin de transmission pour une connexion de session de chacune parmi au moins une couche choisie dans le groupe consistant en une couche transport, une couche réseau, et une couche physique, et
pour déterminer des caractéristiques du chemin de transmission élu.

13. UE selon la revendication 12, dans lequel l'unité de détermination de caractéristique de chemin (213) détermine un chemin de transmission, le nombre de chemins, une taille de session selon un chemin, et des caractéristiques de transmission selon un chemin de la couche ou de chacune parmi au moins deux couches choisies dans le groupe consistant en une couche transport, une couche réseau, et une couche physique,
dans lequel les caractéristiques de transmission selon un chemin comprennent un rendement, un délai, un débit d'erreurs, et un débit de pertes selon un chemin.

[Fig. 1]

APPLICATION LAYER
SERVICE

APPLICATION LAYER
SERVICE

SESSION LAYER
COMBINER

SESSION LAYER
COMBINER

TRANSPORT LAYER
SESSION ◁ SESSION OF TRANSPORT LAYER ▷ SESSION
COMBINER

TRANSPORT LAYER
SESSION
COMBINER

NETWORK LAYER
SESSION ◁ SESSION OF NETWORK LAYER ▷ SESSION

NETWORK LAYER

NETWORK LAYER
SESSION

MAC LAYER
COMBINER

MAC LAYER

MAC LAYER
COMBINER

PHYSICAL LAYER
SESSION ▷ SESSION OF PHYSICAL LAYER ▷ SESSION ▷ SESSION OF PHYSICAL LAYER ▷ SESSION

PHYSICAL LAYER
SESSION

PHYSICAL LAYER
SESSION

UE

NETWORK NODE

SERVER (OR OTHER UE)

[Fig. 2]

UE

USER REQUIREMENT SERVICE →

211
SESSION CHARACTERISTICS DETERMINATION UNIT

213
PATH CHARACTERISTICS DETERMINATION UNIT

215
SESSION CONNECTION CONTROLLER

[Fig. 3]

[Fig. 4]

[Fig. 5]

[Fig. 6]

APPLICATION
LAYER

SERVICE

SESSION
LAYER

TRANSPORT
LAYER

TRP session

NETWORK
LAYER

NET session

MAC
LAYER

PHYSICAL
LAYER

PHY session 1

APPLICATION
LAYER

SERVICE

TRP session

NET session

PHY
session 1

PHY
session 1

[Fig. 7]

APPLICATION
LAYER

SERVICE

SEGMENT THROUGHPUT
30 segments/s

SESSION
LAYER

SEGMENT THROUGHPUT
10 segments/s

SEGMENT THROUGHPUT
20 segments/s

TRANSPORT
LAYER

TRP session 1

TRP session 2

USE PRICE
1W/s

USE PRICE
1W/s

USE PRICE
0W/s

NETWORK
LAYER

NET session 1

NET session 2

NET session 3

NET session 4

BIT ERROR RATE
0.01

MAC
LAYER

BIT ERROR RATE
0.03

BIT ERROR RATE
0.02

PHYSICAL
LAYER

PHY session 1

PHY session 2

PHY session 3

PHY session 4

PHY session 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080279562 A1

- WO 2009005316 A1

**Non-patent literature cited in the description**

- **SCHMIDT D C et al.** Transport system architecture services for high-performance communications systems. *IEEE Journal on selected areas in communications,* 01 May 1993, vol. 11 (4), 489-506